# EUROPEAN PATENT APPLICATION

(11) **EP 3 177 077 A1**
(43) Date of publication of application: **07.06.2017**
(21) Application number: 16200589.6
(22) Date of filing: 24.11.2016
(51) Int. Cl.: H04W 48/12, H04W 48/08, H04W 84/12, H04W 4/00

(54) **METHOD AND DEVICE FOR NETWORK ACCESS**

(30) Priority: 03.12.2015 CN 201510875174
(71) Applicant: Xiaomi Inc., Beijing 100085 (CN)
(72) Inventor: MENG, Deguo, BEIJING, 100085 (CN); GAO, Ziguang, BEIJING, 100085 (CN); HOU, Enxing, BEIJING, 100085 (CN)
(74) Representative: Delumeau, François Guy

(57) **Abstract**

The present disclosure relates to a method and device for network access. The smart terminal device generates (101) a network access request message and broadcasts (101) the network access request message; and then receives (102, 203) a network access response message transmitted by a mobile terminal device, the network access response message includes connection information of a router to be accessed, such that the smart terminal device may connect (103, 204) to the router to be accessed based on the connection information. This method avoids the complicated process of users inputting the router network configuration information when the smart terminal device accesses the network for the first time, which achieves the automatic connection for network access between the smart terminal device and the router and improves the network access efficiency of the smart terminal device.

## Description

### FIELD

The present disclosure relates to a technical field of communication, and more particularly, to a method and device for network access.

### BACKGROUND

With the development of Internet of Things, more and more smart terminal devices come into people's family life, for example, a smart refrigerator, a smart electric lamp, a smart camera, and the like.

Users should connect the smart terminal device to a router device firstly before using it to make the smart terminal device access to WiFi (Wireless Fidelity) network. Generally, the process of the smart terminal device access to network requires the smart terminal device to be setup manually by users, e.g., input the user name and the password of the router. If a network interruption fault occurs on the smart terminal device, users are required to discover the fault in time and manually set up the smart terminal device for network access again to access the router wirelessly.

### SUMMARY

A method and device for network access are provided by the present disclosure to overcome an existing problem in the related art. The technical solutions are set forth as follows.

According to a first aspect, the invention relates to a method for network access. The method includes: generating a network access request message, and broadcasting the network access request message; receiving a network access response message transmitted by a mobile terminal device, the network access response message including connection information of a router to be accessed; and connecting to the router to be accessed based on the connection information to achieve network access.

In one embodiment, the method may further include: detecting whether the smart terminal device is currently in a network connected state; the step of generating the network access request message and broadcasting the network access request message comprising: generating the network access request message and broadcasting the network access request message when it is detected that the smart terminal device is currently in a waiting state for network connection.

In one embodiment, the network access request message may include an MAC address of the smart terminal device, or description information of the smart terminal device.

In one embodiment, the connection information may include: a SSID of the router to be accessed and at least one of a password, an encryption scheme of the router to be accessed, and an MAC address of the router to be accessed.

According to a second aspect, the invention relates to a method for network access, the method including: receiving a network access request message transmitted by the smart terminal device intended to access a network; obtaining connection information of a router to be accessed based on the network access request message; and carrying the connection information of the router to be accessed in a network access response message and transmitting the network access response message to the smart terminal device intended to access the network.

In one embodiment, the network access request message may include an MAC address of the smart terminal device; the step of transmitting the network access response message to the smart terminal device intended to access the network comprises: transmitting the network access response message to the smart terminal device intended to access the network based on the MAC address of the smart terminal device.

In one embodiment, the network access request message may further include description information of the smart terminal device; the step of obtaining the connection information of the router to be accessed based on the network access request message comprises: authenticating the smart terminal device based on the description information; and obtaining the connection information of the router to be accessed upon successful authentication.

In one embodiment, after receiving the network access request message transmitted by the smart terminal device intended to access the network, the method may further include: transmitting an authentication request to the smart terminal device intended to access the network; receiving a authentication response returned by the smart terminal device intended to access the network, the authentication response includes the description information of the smart terminal device; authenticating the smart terminal device based on the description information; and obtaining the connection information of the router to be accessed upon successful authentication.

According to a third aspect, the invention relates to a device for network access, the device including: a generation module configured to generate a network access request message; a broadcast module configured to broadcast the network access request message; a reception module configured to receive a network access response message transmitted by a mobile terminal device, the network access response message including connection information of a router to be accessed; and a connection module configured to connect to the router to be accessed based on the connection information to achieve network access.

In one embodiment, the device may include: a detection module configured to detect whether the smart terminal device is currently in a network connected state; the generation module comprises: a first generation sub-module configured to generate the network access request message when it is detected that the smart terminal device is currently in a waiting state for network connection.

In one embodiment, the network access request message may include an MAC address of the smart terminal device, or description information of the smart terminal device.

In one embodiment, the connection information may include: a SSID of the router to be accessed and at least one of a password, an encryption scheme of the router to be accessed, and an MAC address of the router to be accessed.

According to a fourth aspect, the invention relates to a device for network access, the device including: a first reception module configured to receive a network access request message transmitted by the smart terminal device intended to access a network; a first obtaining module configured to obtain connection information of a router to be accessed based on the network access request message; a processing module configured to carry the connection information of the router to be accessed in a network access response message; and a first transmission module configured to transmit the network access response message to the smart terminal device intended to access the network.

In one embodiment, the network access request message may include an MAC address of the smart terminal device; the first transmission module comprises: a first transmission sub-module configured to transmit the network access response message to the smart terminal device intended to access the network based on the MAC address of the smart terminal device.

In one embodiment, the network access request message may further include description information of the smart terminal device; the first obtaining module comprises: an authentication sub-module configured to authenticate the smart terminal device based on the description information; and an obtaining sub-module configured to obtain the connection information of the router to be accessed upon successful authentication.

In one embodiment, the device may further include: a second transmission module configured to transmit an authentication request to the smart terminal device intended to access the network; a second reception module configured to receive a authentication response returned by the smart terminal device intended to access the network, the authentication response includes the description information of the smart terminal device; an authentication module configured to authenticate the smart terminal device based on the description information; and a second obtaining module configured to obtain the connection information of the router to be accessed upon successful authentication.

According to a fifth aspect, the invention relates to a device for network access including: a processor; and a memory for storing instructions executable by the processor; wherein the processor is configured to: generate a network access request message, and broadcast the network access request message; receive a network access response message transmitted by a mobile terminal device, the network access response message includes connection information of a router to be accessed; and connect to the router to be accessed based on the connection information to achieve network access.

Embodiments of the present disclosure may provide at least some of the following beneficial effects.
(1) In one embodiment, the smart terminal device generates a network access request message and broadcasts the network access request message; and then receives a network access response message transmitted by a mobile terminal device, the network access response message includes connection information of a router to be accessed, such that the smart terminal device may connect to the router to be accessed based on the connection information. This method avoids the complicated process of users inputting the router network configuration information when the smart terminal device accesses the network, which achieves the automatic connection for network access between the smart terminal device and the router and improves the network access efficiency of the smart terminal device.
(2) In another embodiment, the smart terminal device learn if the smart terminal device is currently in a network connected state by detection, if yes, generates the network access request message and broadcasts the network access request message. By automatically detecting the network connection state of the smart terminal device by itself, the smart terminal device can broadcast the network access request in time, which ensures the reliability of network access for the smart terminal device.
(3) In another embodiment, the network access request message comprises an MAC address of the smart terminal device, or description information of the smart terminal device, so as to ensure the successful network access of the smart terminal device based on the message by the opposite device.
(4) In another embodiment, the connection information includes: a SSID (Service Set Identifier) of the router to be accessed and at least one of a password, an encryption scheme of the router to be accessed, and an MAC address of the router to be accessed, so as to ensure the accuracy, security and reliability of network access.
(5) In another embodiment, the mobile terminal device receives a network access request message transmitted by the smart terminal device intended to access a network; obtains connection information of a router to be accessed based on the network access request message; and carries the connection information of the router to be accessed in a network access response message and transmits the network access response message to the smart terminal device intended to access the network. This method avoids the complicated process of users inputting the router network configuration information when the smart terminal device accesses the network for the first time, which achieves the automatic connection for network access between the smart terminal device and the router and improves the network access efficiency of the smart terminal device.
(6) In another embodiment, the network access request message includes an MAC address of the smart terminal device, the mobile terminal device transmits the network access response message to the smart terminal device intended to access the network based on the MAC address of the smart terminal device, so as to enable the response message to arrive at the corresponding smart terminal device correctly, which ensures the accuracy of network interaction.
(7) In another embodiment, the network access request message further includes description information of the smart terminal device. The mobile terminal device may authenticate the smart terminal device based on the description information and obtain the connection information of the router to be accessed upon successful authentication, which effectively avoids the illegal smart terminal device accessing the network and ensure the security and reliability of the legal smart terminal device.
(8) In another embodiment, the mobile terminal device may transmit an authentication request to the smart terminal device intended to access the network; receive a authentication response returned by the smart terminal device intended to access the network, the authentication response includes the description information of the smart terminal device; authenticate the smart terminal device based on the description information; and obtain the connection information of the router to be accessed upon successful authentication, so as to ensure the accuracy, security and reliability of network access.

It is to be understood that the above general description and the following detailed description are merely for the purpose of illustration and explanation, and are not intended to limit the scope of the protection of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for network access according to an exemplary embodiment;
Fig. 2 is a flow diagram illustrating a method for network access according to another exemplary embodiment;
Fig. 3 is a flow diagram illustrating a method for network access according to an exemplary embodiment;
Fig. 4 is a flow diagram illustrating a method for network access according to another exemplary embodiment;
Fig. 5 is a block diagram illustrating a device for network access according to an exemplary embodiment;
Fig. 6 is a block diagram illustrating a device for network access according to another exemplary embodiment;
Fig. 7 is a block diagram illustrating a device for network access according to an exemplary embodiment;
Fig. 8 is a block diagram illustrating a device for network access according to another exemplary embodiment; and
Fig. 9 is a block diagram illustrating a device 900 for network access according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

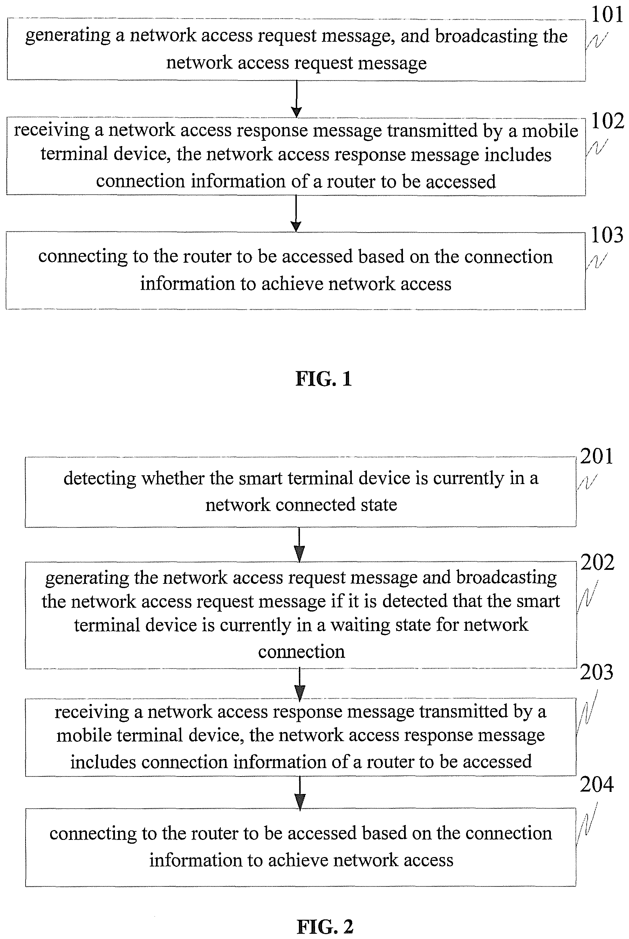

Fig. 1 is a flow diagram illustrating a method for network access according to an exemplary embodiment. As shown in Fig. 1, for example, a method for network access is applied to a smart terminal device, and the method of this embodiment includes the following steps.

In step 101, a network access request message is generated, and the network access request message is broadcasted.

The method for network access may be applied to a smart terminal device, for example, a smart refrigerator, a smart electric lamp, a smart camera and the like. The smart terminal device may connect to Internet by accessing WiFi network wirelessly, to form a smart Internet of Things network in which information interaction between things is performed, for example, the network interaction between a mobile terminal device (a mobile phone, a PAD, etc.) and a smart refrigerator or a smart camera. Before the first network access of the smart terminal device, network configuration should be performed on the device. In the configuration procedure, after being powered, the smart terminal device may automatically generate a network access request message for network access and broadcast it to the surroundings to enable the surrounding devices to receive the request message and provide the smart terminal device the information of the network resource to be accessed. The message is a beacon message in compliance with the 802.11 Standard.

In step 102, a network access response message transmitted by a mobile terminal device is received; the network access response message includes connection information of a router to be accessed.

The mobile terminal device, e.g., a mobile phone terminal, may be installed with an APP client capable of performing the method for network access based on the smart terminal device, and may scan wireless message around it using the APP client periodically. When the mobile terminal device receives a broadcast beacon message from the smart terminal device intended to access the network, the APP client may pop-up a prompt to remind the user that a smart terminal device around he or she request to access the network, and the mobile terminal device may send a network access response message if the user accepts the network access request. The network access response message includes connection information of the router allowing to be accessed by the smart terminal device, so as to make the smart terminal device intended to access the network accesses the designated router.

In step 103, the smart terminal device connects to the router to be accessed based on the connection information to achieve network access.

In conclusion, the method for network access provided by this embodiment may comprises: generating a network access request message and broadcasting the network access request message by the smart terminal device; and then receiving a network access response message transmitted by a mobile terminal device, the network access response message includes connection information of a router to be accessed, such that the smart terminal device may connect to the router to be accessed based on the connection information. This method avoids the complicated process of users inputting the router network configuration information when the smart terminal device accesses the network for the first time, which achieves the automatic connection for network access between the smart terminal device and the router and improves the network access efficiency of the smart terminal device.

Fig. 2 is a flow diagram illustrating a method for network access according to another exemplary embodiment. As shown in Fig. 2, for example, a method for network access is applied to a smart terminal device in this embodiment, and the method of this embodiment includes the following steps.

In step 201, whether the smart terminal device is currently in a network connected state is detected.

After being powered, the smart terminal device detects whether it already has access to the WiFi network. If the smart terminal device has stored the information for accessing the router, performing the normal procedure for network access; if the smart terminal device is the device access to the network for the first time or the network cannot be connected due to changes of network settings, it detected that it is in a state of no network access.

In step 202, if it is detected that the smart terminal device is currently in a waiting state for network connection, the network access request message is generated and broadcasted.

The network access request message comprises an MAC address of the smart terminal device, or description information of the smart terminal device, or both the MAC address and description information of the smart terminal device. The MAC address (Media Access Control address) refers to a physical address, a hardware address of the smart terminal device and is used to indicate the position of the smart terminal device. The opposite device which receives the network access request message may parse the MAC address information in the message so as to correctly return the response message to the smart terminal device. The description information of the smart terminal device may include the information about the model, name, manufacture of the device and the like, so that the opposite device, e.g., mobile phone terminal, may identify the type of the device based on the description information, so as to provide the smart device the most appropriate network routing access device. For example, for the beacon message in compliance with the 802.11 Standard, the MAC address information may be arranged in the BSSID field of the Mac header of the 802.11 frame. The description information of the smart terminal device may be arranged in the SSID domain of the 802.11 frame.

In step 203, a network access response message transmitted by the mobile terminal device is received; the network access response message comprises the connection information of the router to be accessed.

The connection information includes: a SSID (Service Set Identifier) of the router to be accessed and at least one of a password, an encryption scheme of the router to be accessed, and an MAC address of the router to be accessed, so as to ensure the accuracy, security and reliability of network access.

In step 204, the smart terminal device connects to the router to be accessed based on the connection information to achieve network access.

In conclusion, the method for network access provided by this embodiment may ensure the reliability of network access further by automatically detecting the network connection state of the smart terminal device, and broadcasting the network access request if the smart terminal device is in a network connected state. Meanwhile, by generating a network access request message and broadcasting the network access request message by the smart terminal device; and then receiving a network access response message transmitted by a mobile terminal device which includes connection information of a router to be accessed, the smart terminal device may connect to the router to be accessed based on the connection information. This method avoids the complicated process of users inputting the router network configuration information when the smart terminal device accesses the network for the first time, which achieves the automatic connection for network access between the smart terminal device and the router and improves network access efficiency of the smart terminal device.

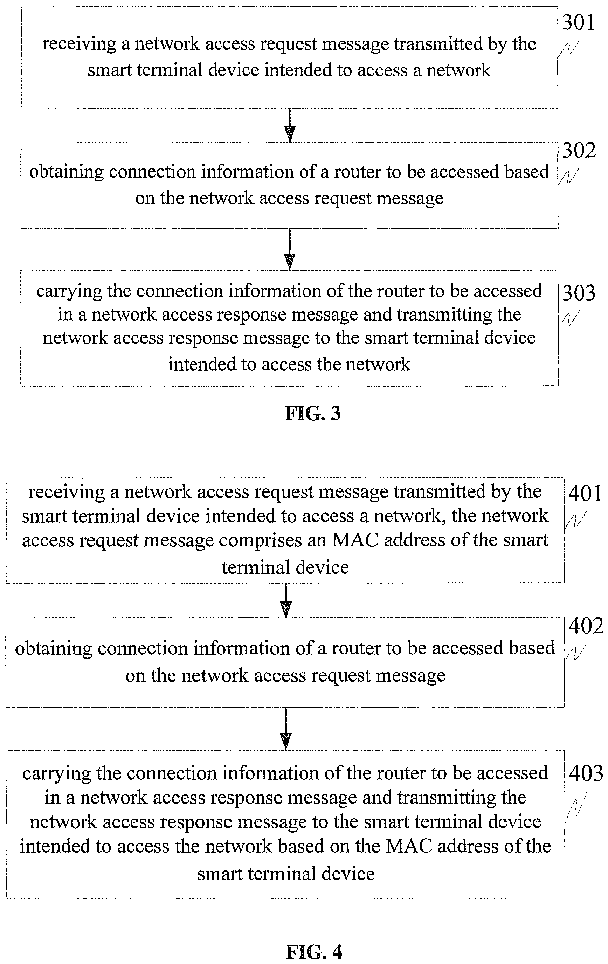

Fig. 3 is a flow diagram illustrating a method for network access according to an exemplary embodiment. As shown in Fig. 3, for example, a method for network access is applied to a mobile terminal device in this embodiment, and the method of this embodiment includes the following steps.

In step 301, a network access request message transmitted by a smart terminal device is received.

The mobile terminal device, e.g., a mobile phone terminal, may be installed with an APP client used to perform the method for network access based on the terminal device. The mobile phone terminal may open the APP client and monitor the beacon message from the air interface, and the mobile phone terminal may also send the surroundings a broadcast message that if there is any device waiting for network access. Upon receiving the broadcast beacon message transmitted by the smart terminal device intended to access the network, the mobile terminal device may extract the attribute information, for example, the MAC address, description information of the device and the like, from the smart terminal device intended to access the network; and then the user is prompted by a dialog box or a push message that the smart terminal device intended to access the network exists around he or she, if the user choose to accept the network access request, the mobile terminal device may send a network access response message which includes the connection information of the router that the smart terminal device is allowed to access, so that the smart terminal device intended to access the network may access the designated router.

In step 302, the connection information of a router to be accessed is obtained based on the network access request message.

The mobile terminal device may pre-store connection information of at least one router which can provide the network connection services, and the connection information of any one of the routers may be obtained and provided to the smart terminal device intended to access the network; or the mobile terminal device may also transmit a request message for network configuration information to the router to obtain the connection information of the router. In step 303, the connection information of the router to be accessed is carried in a network access response message and the network access response message is transmitted to the smart terminal device intended to access the network.

In conclusion, the method for network access provided by this embodiment comprises: the mobile terminal device receiving a network access request message transmitted by the smart terminal device intended to access a network; obtaining connection information of a router to be accessed based on the network access request message; and carrying the connection information of the router to be accessed in a network access response message and transmitting the network access response message to the smart terminal device intended to access the network. This method avoids the complicated process of users inputting the router network configuration information when the smart terminal device accesses the network for the first time, which achieves the automatic connection for network access between the smart terminal device and the router and improves network access efficiency of the smart terminal device.

Fig. 4 is a flow diagram illustrating a method for network access according to another exemplary embodiment. As shown in Fig. 4, for example, a method for network access is applied to a mobile terminal device in this embodiment, and the method of this embodiment includes the following steps.

In step 401, a network access request message transmitted by the smart terminal device intended to access a network is received, wherein the network access request message comprises an MAC address of the smart terminal device.

The MAC address (Media Access Control address) refers to a physical address, a hardware address of the smart terminal device and is used to indicate the position of the smart terminal device. The mobile terminal device which receives the network access request message may parse the MAC address information in the message so as to correctly return the response message to the corresponding smart terminal device.

In step 402, the connection information of the router to be accessed is obtained based on the network access request message.

In step 403, the connection information of the router to be accessed is carried in a network access response message and the network access response message is transmitted to the smart terminal device intended to access the network based on the MAC address of the smart terminal device.

The connection information of the router to be accessed is carried in a network access response message and is directionally transmitted to the smart terminal device intended to access the network, the "directionally" means that the MAC address of the smart terminal device acts as the destination address. The directional network access response message may be a probe request frame in compliance with the 802.11 Standard. In the probe request frame, the connection information of the router to be accessed is carried in the vendor data field which may contain more data information, and the mobile terminal device (e.g., a mobile phone), may configure the connection information of the router in the vender data field and directionally transmit the connection information to the smart terminal device intended to access the network. The connection information may include a SSID of the router to be accessed and at least one of a password, an encryption scheme of the router to be accessed, and an MAC address of the router to be accessed, so as to ensure the accuracy, security and reliability of network access.

Furthermore, the network access request message may further include the description information of the smart terminal device. In step 402, obtaining the connection information of the router to be accessed based on the network access request message may comprise: authenticating the smart terminal device based on the description information; and obtaining the connection information of the router to be accessed upon successful authentication. The description information of the smart terminal device may include the information about the model, name, manufacture of the device and the like, and the mobile terminal device may identify a device based on the description information of the device, so as to determine that the smart terminal device intended to access the network is a legal terminal and provide the connection information of the router to the approved terminal. The authentication process may compare the description information with the device information pre-stored in the mobile terminal, and it can also transmit the description information of the device to an authentication platform on the cloud by the mobile terminal device to verify the identity of the smart terminal device.

Further, In step 401, after receiving the network access request message transmitted by the smart terminal device intended to access the network, it further includes: transmitting an authentication request to the smart terminal device intended to access the network; receiving a authentication response returned by the smart terminal device intended to access the network, the authentication response includes the description information of the smart terminal device; authenticating the smart terminal device based on the description information; and obtaining the connection information of the router to be accessed upon successful authentication.

In the situations that the smart terminal device doesn't attach the description information of the device into the network access request message, the mobile terminal device may send an authentication request proactively to obtain the description information of the smart terminal device and verify its legality, and then allow the smart terminal device to access the network upon successful authentication.

In conclusion, the method for network access provided by this embodiment may ensure the accuracy of the network interaction further by comprising the MAC address of the smart terminal device in the network access request message, such that the mobile terminal device may directionally transmit the network access response message to the smart terminal device intended to access the network based on the MAC address of the smart terminal device, so as to enable the response message to arrive at the corresponding smart terminal device correctly. In addition, the mobile terminal device may authenticate the smart terminal device based on the description information of the smart terminal device so as to enable the approved smart terminal device to obtain the connection information of the router, which effectively avoids the illegal smart terminal device accessing the network and ensures the security and reliability of the legal smart terminal device.

Device embodiments of the present disclosure which can be used to perform the method embodiments of the present disclosure are as bellow. For the details undisclosed in the device embodiments of the present disclosure, please refer to the method embodiments of the present disclosure.

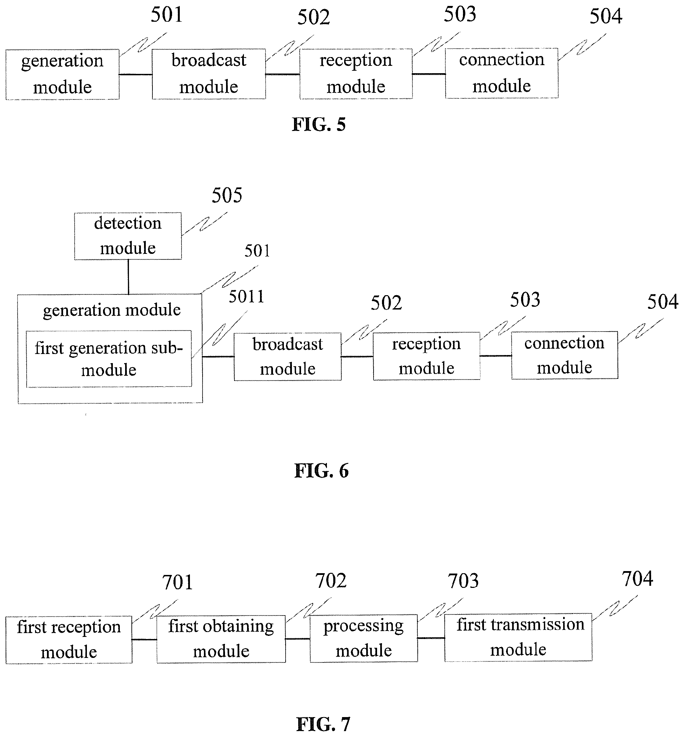

Fig. 5 is a block diagram illustrating a device for network access according to an exemplary embodiment, the device for network access may be implemented as part or all of the electronic device via software, hardware or the combination of them. the device may include: a generation module 501 configured to generate a network access request message; a broadcast module 502 configured to broadcast the network access request message; a reception module 503 configured to receive a network access response message transmitted by a mobile terminal device, the network access response message includes connection information of a router to be accessed; and a connection module 504 configured to connect to the router to be accessed based on the connection information to achieve network access.

In conclusion, the device for network access provided by this embodiment may generate a network access request message and broadcast the network access request message by the smart terminal device; and then receive a network access response message transmitted by a mobile terminal device, the network access response message includes connection information of a router to be accessed, such that the smart terminal device may connect to the router to be accessed based on the connection information. This method avoids the complicated process of users inputting the router network configuration information when the smart terminal device accesses the network for the first time, which achieves the automatic connection for network access between the smart terminal device and the router and improves the network access efficiency of the smart terminal device.

Fig. 6 is a block diagram illustrating a device for network access according to another exemplary embodiment, the device for network access may be implemented as part or all of the electronic device via software, hardware or the combination of them. Based on the above described device embodiment, the device may further includes a detection module 505 configured to detect whether the smart terminal device is currently in a network connected state. The generation module 501 comprises: a first generation sub-module 5011 configured to generate the network access request message if the detection module 505 detected that the smart terminal device is currently in a waiting state for network connection.

In one embodiment, the network access request message comprises an MAC address of the smart terminal device, or description information of the smart terminal device.

In one embodiment, the connection information comprises: a SSID of the router to be accessed and at least one of a password, an encryption scheme of the router to be accessed, and an MAC address of the router to be accessed.

With respect to the device in the above described embodiment, specific implementation of the operation performed by each of the modules of the device in the above embodiments has been described in the related method embodiments, which will not be repeated herein.

Fig. 7 is a block diagram illustrating a device for network access according to an exemplary embodiment, the device for network access may be implemented as part or all of the electronic device via software, hardware or the combination of them. The device may include: a first reception module 701 configured to receive a network access request message transmitted by the smart terminal device intended to access a network; a first obtaining module 702 configured to obtain connection information of a router to be accessed based on the network access request message; a processing module 703 configured to carry the connection information of the router to be accessed in a network access response message; and a first transmission module 704 configured to transmit the network access response message to the smart terminal device intended to access the network.

In conclusion, the device for network access provided by this embodiment comprises: the mobile terminal device receiving a network access request message transmitted by the smart terminal device intended to access a network; obtaining connection information of a router to be accessed based on the network access request message; and carrying the connection information of the router to be accessed in a network access response message and transmitting the network access response message to the smart terminal device intended to access the network. This method avoids the complicated process of users inputting the router network configuration information when the smart terminal device accesses the network for the first time, which achieves the automatic connection for network access between the smart terminal device and the router and improves network access efficiency of the smart terminal device.

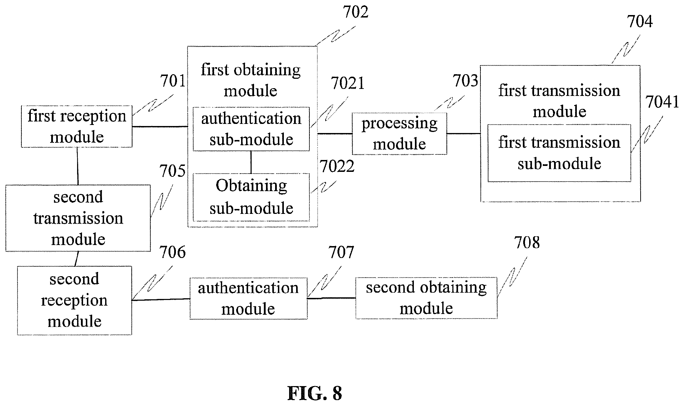

Fig. 8 is a block diagram illustrating a device for network access according to another exemplary embodiment, the device for network access may be implemented as part or all of the electronic device via software, hardware or the combination of them. The network access request message comprises an MAC address of the smart terminal device. The first transmission module 704 comprises: a first transmission sub-module 7041 configured to transmit the network access response message to the smart terminal device intended to access the network based on the MAC address of the smart terminal device.

In one embodiment, the network access request message further includes description information of the smart terminal device.

The first obtaining module 702 includes: an authentication sub-module 7021configured to authenticate the smart terminal device based on the description information; and an obtaining sub-module 7022 configured to obtain the connection information of the router to be accessed upon successful authentication.

In one embodiment, the device further comprises: a second transmission module 705 configured to transmit an authentication request to the smart terminal device intended to access the network; a second reception module 706 configured to receive a authentication response returned by the smart terminal device intended to access the network, the authentication response includes the description information of the smart terminal device; an authentication module 707 configured to authenticate the smart terminal device based on the description information; and a second obtaining module 708 configured to obtain the connection information of the router to be accessed upon successful authentication.

With respect to the device in the above described embodiment, specific implementation of the operation performed by each of the modules of the device in the above embodiments has been described in the related method embodiments, which will not be repeated herein.

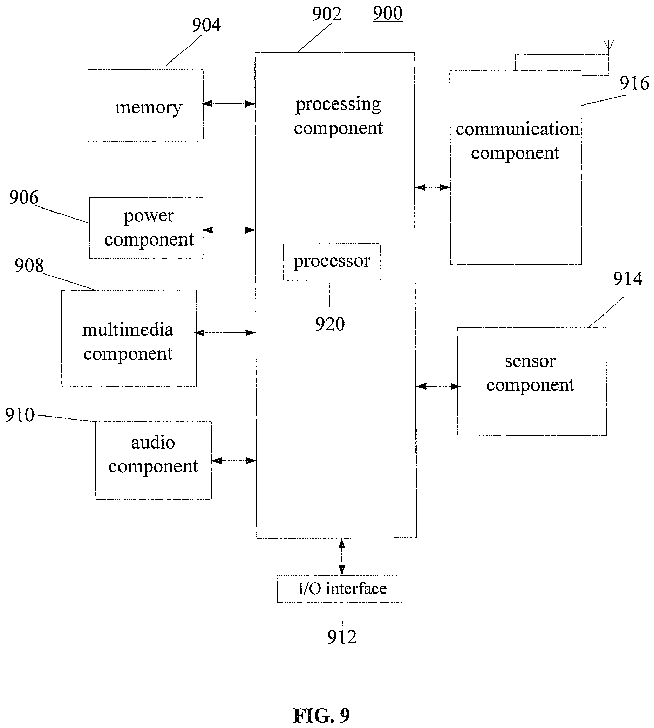

Fig. 9 is a block diagram illustrating a device 900 for network access according to an exemplary embodiment. For example, the device 900 may be a mobile phone, a computer, a digital broadcast terminal, a message transceiver, a game console, a tablet device, a medical equipment, a fitness equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data may include instructions for any applications or methods operated on the device 4900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900.

The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a distance sensor, a pressure sensor, or a temperature sensor.

The communication component 916 is configured to facilitate communication, wired or wirelessly, between the device 400 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 904 including instructions executable by the processor 920 in the device 900 to perform the above-described methods. For example, the non-transitory computer-readable storage medium may be a ROM, a RAM, a CD-ROM, a magnetic tape, a floppy disc, an optical data storage device, and the like. There is provided a non-transitory computer-readable storage medium including instructions that, when executed by a processor of a mobile terminal, enables the mobile terminal to perform the above-described method for network access. The method includes: generating a network access request message, and broadcasting the network access request message; receiving a network access response message transmitted by a mobile terminal device, the network access response message includes connection information of a router to be accessed; and connecting to the router to be accessed based on the connection information to achieve network access.

It should be understood that the disclosure is not limited to the precise structure as described above and shown in the figures, but can have various modification and alternations without departing from the scope of the disclosure. The scope of the disclosure is limited only by the appended claims.

## Claims

1. A method for network access, comprising:
generating (101) a network access request message, and broadcasting (101) the network access request message;
receiving (102, 203) a network access response message transmitted by a mobile terminal device, the network access response message including connection information of a router to be accessed; and
connecting (103, 204) to the router to be accessed based on the connection information to achieve network access.

2. The method of claim 1, further comprising:
detecting (201) whether the smart terminal device is currently in a network connected state;
said step of generating (101) the network access request message and broadcasting (101) the network access request message comprising:
generating (202) the network access request message and broadcasting the network access request message if it is detected that the smart terminal device is currently in a waiting state for network connection.

3. The method of claim 1 or 2, wherein the network access request message comprises an MAC address of the smart terminal device, or description information of the smart terminal device.

4. The method of claim 1 or 2, wherein the connection information comprises: a SSID of the router to be accessed and at least one of a password, an encryption scheme of the router to be accessed, and an MAC address of the router to be accessed.

5. A method for network access comprising:
receiving (301, 401) a network access request message transmitted by the smart terminal device intended to access a network;
obtaining (302, 402) connection information of a router to be accessed based on the network access request message; and
carrying (303) the connection information of the router to be accessed in a network access response message and transmitting (303) the network access response message to the smart terminal device intended to access the network.

6. The method of claim 5, wherein the network access request message comprises an MAC address of the smart terminal device; and wherein :
said step of transmitting (303) the network access response message to the smart terminal device intended to access the network comprises:
transmitting (403) the network access response message to the smart terminal device intended to access the network based on the MAC address of the smart terminal device.

7. The method of claim 6, wherein the network access request message further includes description information of the smart terminal device; said step of obtaining (302, 402) the connection information of the router to be accessed based on the network access request message comprising:
authenticating the smart terminal device based on the description information; and
obtaining the connection information of the router to be accessed upon successful authentication.

8. The method of claim 5 or 6, wherein after receiving (301, 401) the network access request message transmitted by the smart terminal device intended to access the network, the method further comprises:
transmitting an authentication request to the smart terminal device intended to access the network;
receiving a authentication response returned by the smart terminal device intended to access the network, the authentication response includes the description information of the smart terminal device;
authenticating the smart terminal device based on the description information; and
obtaining the connection information of the router to be accessed upon successful authentication.

9. A device for network access comprising components for performing a method for network access according to any one of claims 1 to 2.

10. The device of claim 9 wherein the network access request message comprises an MAC address of the smart terminal device, or description information of the smart terminal device.

11. The device of claim 9 wherein the connection information comprises: a SSID of the router to be accessed and at least one of a password, an encryption scheme of the router to be accessed, and an MAC address of the router to be accessed.

12. A device for network access comprising components for performing a method for network access according to any one of claims 5 to 8.

13. A device for network access comprising:
a processor (920); and
a memory (904) for storing instructions executable by the processor;
wherein the processor is configured to:
generate (101) a network access request message, and broadcast (101) the network access request message;
receive (102, 203) a network access response message transmitted by a mobile terminal device, the network access response message includes connection information of a router to be accessed; and
connect (103, 204) to the router to be accessed based on the connection information to achieve network access.

14. A computer program including instructions for executing the steps of a method for network access according to any one of claims 1 to 2 when said program is executed by a computer.

15. A recording medium readable by a computer and having recorded thereon a computer program including instructions for executing the steps of a method for network access according to any one of claims 1 to 2.
